# EUROPEAN PATENT APPLICATION

(11) **EP 2 710 899 A2**
(43) Date of publication of application: **26.03.2014**
(21) Application number: 12785883.5
(22) Date of filing: 17.05.2012
(51) Int. Cl.: A23L 1/20, A23C 11/10

(54) **NOVEL METHOD FOR EXTRACTING SOYMILK**

(30) Priority: 19.05.2011 KR 20110047441
(71) Applicant: CJ CheilJedang Corporation, Jung-gu Seoul 100-749 (KR)
(72) Inventor: PARK, Jin Sang, Jincheon-gun Chungcheongbuk-do 365-802 (KR); RYOO, Jong Hyun, Incheon 406-754 (KR); PARK, Jong Sub, Hwaseong-si Gyeonggi-do 445-778 (KR); KWON, Soon Hee, Seongnam-si Gyeonggi-do 463-867 (KR); PARK, Hong Wook, Seoul 135-211 (KR); LIM, Hong Kyu, Seoul 133-120 (KR)
(74) Representative: Jostarndt, Hans-Dieter
(86) International application number: PCT/KR2012/003922
(87) International publication number: WO 2012/157990

(57) **Abstract**

The present invention relates to a method for manufacturing soymilk which grinds soaked beans in a multi-phase during a bean curd manufacturing process, and recycles low concentration soymilk recovered while filtering a ground liquid in a multi-phase, thereby maximizing the yield of soymilk.

## Description

### [Technical Field]

The present invention relates to a novel method for extracting soymilk in manufacturing a soybean curd and more particularly relates to a novel method for extracting soymilk by triturating soaked beans in multiple steps, filtering it in multiple steps and collecting low concentration soymilk and recycling thereof.

### [Background Art]

In manufacturing a soybean curd, there has been a live dreg method which is soaking beans, triturating with grinder, obtaining live soymilk by filtering the trituration solution for collecting dregs, steaming the live soymilk and making soymilk. In contrast, there also has been a warm dreg method which is soaking beans, triturating them, steaming the trituration solution and then collecting dregs by filtering.

In the a live dreg method, since the beans are only triturated in one step and filtered in two step, considerable content of beans is wasted in the form of dreg and in the warm dreg method, the beans are only triturated in one step and filtered in one step, there is a limit to maximize yield of soymilk extraction.

In the process of the live dreg method or warm dreg method, a deodorizing method is disclosed in Korean Patent Registration No. 896444 and a method for manufacturing soymilk and soybean curd using alkaline water is disclosed in Korean Patent Application No. 10-2008-7026510.

In addition, efficient method for manufacturing soymilk is disclosed in Korean Patent Application Nos. 10-2008-7026510, 10-2009-7006971, 10-2009-7013511 and a method for manufacturing soybean curd comprising dregs is disclosed in Korean Patent Application No. 10-2008-8227.

However, a method for maximizing yield of soymilk extraction by collecting low concentration soymilk and recycling thereof is not disclosed in any of the above-mentioned documents.

Meanwhile, Japanese Patent Publication No. 2007-60911 discloses a method of extracting soymilk which reduces amount of dregs and minimizes destruction of nutrients of beans and Korean Patent Publication No. 10-1992-2050 discloses a method for increasing yield of soymilk by additional pressing of dregs and Korean Patent Publication No. 10-1989-12561 discloses a method for increasing yield of soymilk by sonification of trituration solution.

### [Technical Problem]

Accordingly, the object of the present invention is maximizing yield of soymilk by collecting content of beans which is wasted by dregs.

Another object of the present invention is recycling dregs which waste thereby reducing food waste.

### [Technical Solution]

The object of the present invention is achieved by providing a method of extracting content of beans which is wasted by dregs.

In the present invention, if soaked beans are triturated, yield of soymilk extraction is increased. However, quality of soymilk became worse by mixing of dregs. In addition, if soaked beans are filtered by fine screen, yield of soymilk extraction is increased but quality of soymilk became worse by mixing of dregs too. Considering these drawbacks, to maximize yield of soymilk extraction without damaging quality of soymilk, the present inventors choose proper particle size, multiple steps of filtration and steaming dregs thereby completing the present invention.

### [Advantageous Effect]

The present invention minimizes content of wasted bean by 2 steps of trituration and 3 steps of filtration and therefore there is outstanding effect in maximizing yield of protein extraction and yield of soymilk.

### [Description of Drawings]

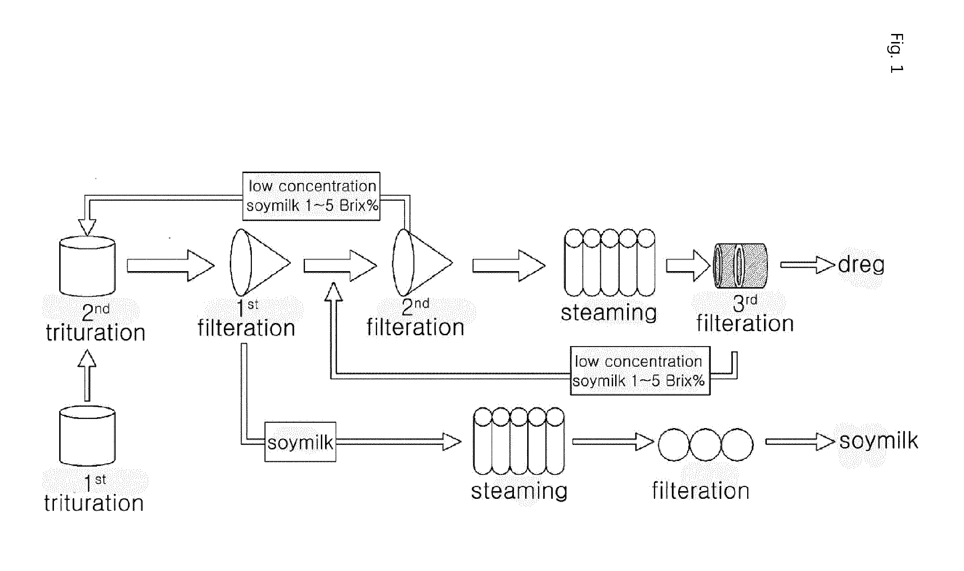

Figure 1 is process scheme of novel method of extracting soymilk.

### [Mode for Invention]

Hereafter, a method for maximizing yield of soymilk extraction using multiple steps of trituration, steaming and multiple steps of filtration will be explained through the figure.

The present invention is characterizing in consisting 2 steps of trituration and 3 steps of filtration.

At first, soaked beans are triturated in 2 steps of trituration.

The purpose of trituration of fully water-soaked beans is to elucidate content of beans by chopping.

For a grinder for trituration of fully water-soaked beans, generally millstone of 10-12 inch sized in diameter is used.

In addition, material of a millstone is generally silicon carbonate or white alumina. However, if the diameter of the millstone is too small, the cross sectional area is reduced and a particle size which is required in the present invention cannot be obtained. Therefore, yield of extraction is decreased. If the diameter of the millstone is too big, it is not effective for maintaining grinder.

In an Example of the present invention, most preferably, the most optimized trituration solution is obtained by using a grinder installed millstone of 10-15 inch sized in diameter.

In a method for trituration, 2 steps of trituration not 1 step is used and it made particle size of trituration solution even and minimized trituration heat compared to conventional 1 step of trituration and therefore increase yield of soymilk extraction. The trituration solution of 2 steps of trituration performs 3 steps of filtration to obtain live soymilk and preferably it is performed by steaming at 95°C-115°C, most preferably at 98°C-110°C and filtering.

Next, the trituration solution is filtered in 3 steps.

In the present invention, yield of soymilk extraction is maximized by combination of live dreg method and warm dregs method.

Meanwhile, if the trituration solution is steamed, there is a limit for maximizing yield of soymilk extraction by heat denaturation of protein. Therefore, dregs are isolated by filtering trituration solution in 2 steps and the dregs is additionally steamed and filtered to collect content of bean which is wasted as dregs and maximizing soymilk extraction.

At this time, if a screen size is larger than 120 mesh, it is hard to separate dregs and yield of soymilk extraction is decreased because the size of screen is small. If a screen size is smaller than 80 mesh, dregs are mixed to soymilk and decrease quality of soymilk.

In filtration of step 3, because it is a last step for collecting content of bean which is wasted in the form of dregs, a screen having small screen size should be used and most preferable range is 100-150*µ*m.

Meanwhile, dregs isolated from filtration of step 1 is diluted (1:3-5 w/w) with water or/and low concentration soymilk (1-5 Brix) obtained from filtration of step 3 and performs filtration of step 2 and used for trituration water for soaked beans. In addition, the dregs collected in filtration of step 2 is steamed at 70°C-100°C and diluted at a ratio of dregs: water=1:3-5(w/w) and perform filtration of step 3. And the low concentration soymilk (1-5 Brix) obtained from this process is recycled for diluents for dregs of filtration of step 1.

As can be seen foregoing, by combining advantage of live dregs method and warm dregs method, soymilk extraction was maximized.

Hereafter, the present invention will be described in detail.

### <Example 1> Production of trituration solution of 2 steps

100 kg of qualified beans (Taegwang beans, produced in the year of 2010) was washed, soaked in the water of 15°C for 20 hrs. Then, for 1^{st} step, they were triturated with a grinder (Nakazawa Co., Japan) installed white alumina millstone of 12 inch sized in diameter adding 4.5 times of water.

The trituration solution was again triturated with a grinder (Nakazawa Co., Japan) installed white alumina millstone of 15 inch sized in diameter and obtained the trituration solution of the present invention.

For Comparison Example, conventionally the trituration solution was obtained by single trituration with a grinder (Nakazawa Co., Japan) installed white alumina millstone of 12 inch sized in diameter adding 4.5 times of water.

The trituration solution of the 2^{nd} trituration of the present invention showed proper particle sizes without particles larger than 3mm.

### <Example 2> Filtration of 3 steps and Production of soymilk

The trituration solution obtained from 2 steps of trituration in the Example 1 was filtered in cylinder filter as the 1^{st} step and isolated dregs and obtained soybean milk.

At this time, the soybean milk was steamed with steaming machine (Mase Co., Japan) at 105°C and used for soymilk for manufacturing soybean curd.

The dregs isolated from the 1^{st} filtration was diluted (dregs: water or/and low concentration = 1:4(w/w)) with water or/and low concentration soymilk obtained from 3^{rd} filtration and performed the 2^{nd} filtration and the low concentration soymilk (4 Brix) obtained from this process is recycled as trituration diluents.

Meanwhile, the dregs isolated from the 2^{nd} filtration were diluted with water at a ratio of dregs: water = 1:4(w/w), steamed at 85°C, and performed 3^{rd} filtration. The concentration of the low concentration soymilk was 2.5 Brix% and contributed for increasing yield of soymilk by recycling as diluents for dregs of the 1^{st} filtration.

The dregs isolated from the 3^{rd} filtration are finally discarded thereby completing 2 steps of trituration and 3 steps of filtration of the present invention.

Meanwhile, for the Comparison Example, the trituration solution of the Example 1 was steamed at 105°C and filtered only one time and obtained soymilk.

The yield of soymilk of the Example of the present invention which is completed by 2 steps of trituration and 3 steps of filtration and the Comparison Example is as follows:

**[Table 1]**

| Yield of soymilk | | |
|---|---|---|
| Remark | Amount of soymilk (%) | Yield of soymilk (%) |
| 2 steps of trituration+ 3 steps of filtration of <the present invention> | 680 | 680 |
| 1 step of trituration+ 1 step of filtration of <the Comparison Example> | 600 | 600 |

As can be seen in [Table 1], in the conventional method of producing soy milk consisting one step of trituration and one step of filtration, yield of soymilk is around 600%. However, in the method of the present invention consisting 2 steps of trituration and 3 steps of filtration, yield of soymilk was 680% that is increased in 13.3%.

In addition, the change of yield of protein extraction according to the Examples and the Comparison example of the present invention is shown as [Table 2].

**[Table 2]**

| Change of yield of protein extraction | | |
|---|---|---|
| Remark | Protein in dreg (%) | Yield of protein extraction(%) |
| 2 steps of trituration+ 3 steps of filtration of <the present invention> | 2.8 | 49.0 |
| 2 steps of trituration+ 2 steps of filtration of <the present invention> | 3.5 | 36.4 |
| 1 step of trituration+ 2 steps of filtration of <the present invention> | 4.4 | 20.0 |
| 1 step of trituration+ 1 steps of filtration of <the present invention> | 5.5 | 0.0 |

As can be seen in [Table 2], in the Comparison example consisting 1 step of trituration and 1 step of filtration, content of protein in dreg is 5.5%. However, in the present invention, content of protein in dreg in the method consisting of one step of trituration and 2 steps of filtration is 4.4% (yield of protein extraction 20%) and in the method consisting of 2 steps of trituration and 2 steps of filtration is 3.5% (yield of protein extraction 35.4%), and in the method consisting of 2 steps of trituration and 3 steps of filtration is 2.8% (yield of protein extraction 49%). Therefore, the present inventors confirmed that yield of present invention is significantly increased by the method of the present invention.

### [Industrial Applicability]

As can be seen foregoing, the present invention significantly increased protein extraction and yield of soymilk production by the method of 2 steps of trituration and 3 steps of filtration. Therefore, the present invention is very useful in production and processing of soymilk.

## Claims

1. A method of producing soymilk by soaking, triturating and filtering soybean; wherein **characterizing in that** comprising obtaining trituration solution by 1^{st} and 2^{nd} step trituration and performing 1^{st} step filtering the trituration solution and 2^{nd} step filtering with the separated dreg therefrom, steaming the dreg thereafter and performing 3^{rd} step filtering.

2. A method of producing soymilk of claim 1, wherein the 1^{st} step trituration is **characterizing in** using a grinder installed a millstone of 10∼15 inch sized in diameter.

3. A method of producing soymilk of claim 1, wherein the 2^{nd} step trituration is **characterizing in** performing by a grinder installed a millstone of 10∼15 inch sized in diameter with the low concentration soymilk obtained from the 2^{nd} step filtration.

4. A method of producing soymilk of claim 1, wherein the 2^{nd} filtration is **characterizing in** using the low concentration soymilk of 1∼5 Brix% as a dreg diluent obtained from the 3^{rd} step filtration.

5. A method of producing soymilk of claim 1, wherein the 3^{rd} step filtration is **characterizing in** diluting the dreg isolated from the 2^{nd} filtration (with a ratio of 1:3∼5 to water).
